(19) Europäisches Patentamt
European Patent Office
Office européen des brevets

(11) Veröffentlichungsnummer: **0 361 324 A1**

(12) **EUROPÄISCHE PATENTANMELDUNG**

(21) Anmeldenummer: **89117531.7**

(51) Int. Cl.5: **C02F 3/30**

(22) Anmeldetag: **22.09.89**

(30) Priorität: **26.09.88 CS 6357/88**

(43) Veröffentlichungstag der Anmeldung: **04.04.90 Patentblatt 90/14**

(84) Benannte Vertragsstaaten: **AT CH DE FR GB IT LI NL**

(71) Anmelder: **INCOTEX statni podnik ekonomickoorganizacni ustav
Hybesova 42
Brno(CS)**

(72) Erfinder: **Mackrle, Svatopluk, Dipl.-Ing.
Pavlikova 5
Brno(CS)**
Erfinder: **Mackrle, Vladimir, Dr.-Ing.
Prokofjevova 16
Bratislava(CS)**
Erfinder: **Dracka, Oldrich, Doz.Dr.
Lipová 25
Brno(CS)**

(74) Vertreter: **Patentanwälte Beetz sen. - Beetz jun. Timpe - Siegfried - Schmitt-Fumian-Mayr
Steinsdorfstrasse 10
D-8000 München 22(DE)**

(54) **Verfahren und Vorrichtung zur Denitrifikation stickstoffhaltiger Abwässer.**

(57) Die Erfindung betrifft ein Verfahren sowie eine Vorrichtung zur Denitrifikation von Abwässern, insbesondere mit hohem Gehalt an stickstoffhaltigen Verunreinigungen, durch biologische Reinigung mit einem einheitlichen aktivierten Schlamm in einem Zirkulationssystem, in dem zwei Oxidationszonen und eine Reduktionszone kombiniert sind, wobei ein erster Teilstrom (6) des eingesetzten Rohabwassers (5) der ersten Oxidationszone (1) und der zweite Teilstrom (7) der Reduktionszone (2) zugeführt wird und das gereinigte Abwasser nach Fluidfiltration aus der zweiten Oxidationszone (3) abgeführt wird.

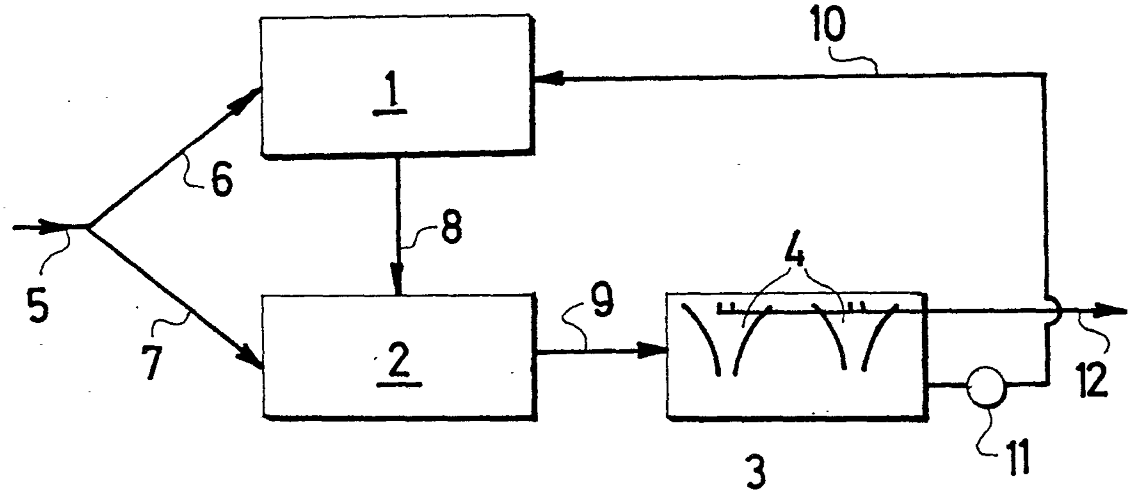




Xerox Copy Centre

## Verfahren und Vorrichtung zur Denitrifikation stickstoffhaltiger Abwässer

Die Erfindung betrifft ein Verfahren sowie eine Vorrichtung zur Denitrifikation von Abwässern, insbesondere von Abwässern mit hohem Gehalt an stickstoffhaltigen Verbindungen, durch biologische Aktivierungsreinigung mit einheitlichem Belebtschlamm, mit denen ein erhöhter Wirkungsgrad der Reinigung unter Erhalt guter Parameter des gereinigten Wassers bei verbesserter Wirtschaftlichkeit erzielt werden kann.

Zur Reinigung von Abwässern bzw. zur Beseitigung stickstoffhaltiger Verunreinigungen in Abwässern werden bereits verschiedene technische Verfahren angewandt. Das wirkungsvollste und am meisten angewandte Verfahren beruht auf der biologischen Nitrifikation und Denitrifikation in einem System mit einem einheitlichen aktivierten Schlamm. Unter einem einheitlichen aktivierten Schlamm wird dabei ein einziger, gemeinsamer Schlamm verstanden, der im Reinigungssystem zirkuliert.

Bei diesem System der biologischen Reinigung von Abwässern wird der einheitliche aktivierte Schlamm abwechselnd oxidierenden und reduzierenden Bedingungen ausgesetzt wobei während des Vorliegens der oxidierenden Bedingungen in Gegenwart von gelöstem Sauerstoff in der Aktivierungsmischung eine Oxidation von Ammoniakstickstoff und organischem Stickstoff zu Nitraten und während des Vorliegens der reduzierenden Bedingungen im Medium eine Reduktion der Nitrate zu gasförmigem Stickstoff erfolgen.

Eine Bedingung für den Ablauf des Denitrifikationsprozesses ist, außer dem Vorliegen des reduzierenden Mediums ohne Gegenwart von gelöstem Sauerstoff in der Abwassermischung, ein Gehalt eines leicht biologisch abbaubaren organischen Stoffs im Abwasser. Als Quelle organischer Stoffe für Denitrifikationsvorgänge kann dem Abwasser z.B. Methanol beigemischt werden. Für eine wirtschaftlichere Durchführung der Denitrifikation von Abwässern werden jedoch als Quelle für biologisch abbaubare organische Stoffe die im Abwasser vorliegenden Verunreinigungen selbst herangezogen. In diesem Fall wird bei der biologischen Reinigung zunächst in einer ersten Reinigungsstufe eine unter sauerstofffreien Bedingungen vorgenommene Denitrifikation durchgeführt, in die das rohe Abwasser eingeführt wird; als zweite Reinigungsstufe wird anschließend eine biologische Aktivierung unter Oxidation durchgeführt, wobei ein biologischer Abbau organischer Stoffe und eine Oxidation stickstoffhaltiger Stoffe zu Nitraten erfolgen.

Die Reduktion unter sauerstofffreien Bedingungen und die Oxidation erfolgen bei diesem Reinigungsverfahren in einem geschlossenen Zirkulationskreis, bei dem die durch Oxidation von Ammoniakstickstoff und organischem Stickstoff in der Aktivierungszone entstandenen Nitrate der Denitrifika tions- bzw. Reduktionszone zugeführt werden, wo sie zu gasförmigem Stickstoff reduziert werden. Die Restmenge an Nitraten in Abhängigkeit von der Intensität der Zirkulation zwischen der Oxidationszone und der Reduktionszone ist durch folgende Gleichung gegeben:

$$\eta = \frac{1}{n + 1} ,$$

worin $\eta$ den Restanteil an Nitratstickstoff bei der Denitrifikation und n das Zirkulationsverhältnis bedeuten. n stellt dabei einen dimensionslosen Faktor dar, mit dem die verarbeitete Abwassermenge Q multipliziert wird: Wenn z.B. die verarbeitete Abwassermenge Q = 100 $m^3$/h beträgt, resultiert bei n = 10 eine Zirkulationsmenge von 1000 $m^3$/h. So beträgt beispielsweise bei einem Wert n = 9 der Wirkungsgrad der Denitrifikation 90 %, da der Restanteil $\eta$ an Stickstoff 1/10 der ursprünglichen Menge beträgt.

Der Wirkungsgrad $\eta'$ der Denitrifikation ergibt sich folglich zu

$$\eta' = \frac{n}{n+1} \cdot 100\ (\%).$$

$\eta$ und damit $\eta'$ können ferner mit einem apparatebezogenen Koeffizienten multiplikativ gewichtet sein.

Ungeachtet der großen Vorteile dieses Verfahrens der Denitrifikation, bei dem die im Abwasser enthaltenen organischen Verunreinigungen selbst als Reduktionsmittel herangezogen werden, unterliegt dieses Verfahren gewissen Einschränkungen.

In Fällen von Abwässern mit einer hohen Konzentration an stickstoffhaltigen Verunreinigungen ist die Erzielung eines Wirkungsgrades von 90 % bei der Beseitigung von Nitraten, die durch eine Intensität der Zirkulation von n = 9 erzielt wird, nicht ausreichend. Eine höhere Zirkulationsintensität ist andererseits mit

einem sehr hohen Energieverbrauch verbunden, so daß die Erhöhung des Wirkungsgrads über eine gewisse Grenze hinaus bei dieser Verfahrensweise nicht mehr wirtschaftlich ist.

Auch im Fall von Abwässern mit geringem Gehalt an stickstoffhaltigen Stoffen, wo der erzielbare Beseitigungsgrad der Nitrate den Anforderungen entspricht, ist der Energieaufwand für die Zirkulation hoch, insbesondere im Fall großer Volumina an gereinigtem Wasser, wie dies beispielsweise bei der Reinigung städtischer Abwässer der Fall ist.

Der Erfindung liegt die Aufgabe zugrunde, ein Verfahren und eine Vorrichtung zur Denitrifikation von Abwässern, insbesondere von Abwässern mit hohem Gehalt an stickstoffhaltigen Verunreinigungen, durch biologische Aktivierungsreinigung mit Belebtschlamm anzugeben, womit gegenüber dem Stand der Technik ein höherer Wirkungsgrad der Denitrifikation bei gleichzeitiger Beseitigung oder zumindest wesentlicher Verringerung der oben erläuterten Nachteile erzielt werden kann, wobei zugleich auch eine Rationalisierung bestehender Reinigungsanlagen mit Denitrifikation möglich sein soll.

Die Aufgabe wird anspruchsgemäß gelöst. Die abhängigen Ansprüche betreffen vorteilhafte Ausführungsformen der Erfindungskonzeption.

Das Wesen der Erfindungskonzeption beruht darauf, daß ein Teil des Abwassers zunächst mittels eines einheitlichen, rückgeführten Belebtschlamms einer ersten Oxidation und Aktivierung unterworfen wird und die durch Oxidation entstandenen Nitrate zusammen mit Nitraten der zirkulierenden Aktivierungsmischung einem ohne Anwesenheit von Sauerstoff ablaufenden Reduktionsvorgang ausgesetzt werden, wobei der restliche Teil des Abwassers in dieser Stufe eingeführt wird und der Rest der stickstoffhaltigen Verunreinigungen dieses restlichen Teils des Abwassers durch einen zweiten Oxidations- und Aktivierungsvorgang oxidiert wird, bei dem Wasser aus dem Reduktionsprozeß zugeführt wird, wobei Nitrate, die während dieses zweiten Oxidationsvorgangs entstehen, zusammen mit dem aktivierten Schlamm zum ersten Oxidationsprozeß rückgeführt und anschließend im Reduktionsprozeß beseitigt werden.

Das erfindungsgemäße Verfahren zur Denitrifikation von Abwässern, das insbesondere auch zur Behandlung von Abwässern mit hohem Gehalt an stickstoffhaltigen Verbindungen geeignet ist und auf der biologischen Aktivierungsreinigung mit einem einheitlichen, im Reinigungssystem zirkulierenden aktivierten Schlamm in einer Oxidationsstufe und einer Reduktionsstufe beruht, ist dadurch gekennzeichnet, daß

- eine Teilmenge des Rohabwassers zunächst in einer ersten Oxidationsstufe mit Hilfe von rückgeführtem aktiviertem Schlamm oxidiert wird,
- die durch Oxidation entstandenen Nitrate zusammen mit Nitraten aus rückgeführtem Aktivierungsgemisch in der Reduktionsstufe reduziert werden, wobei die restliche Teilmenge des Rohabwassers in die Reduktionsstufe eingeführt wird,

und

- der Rest der stickstoffhaltigen Verunreinigungen dieser Teilmenge des Abwassers in einer zweiten Oxidationsstufe oxidiert wird, in die Abwasser aus der Reduktionsstufe eingeführt wird, wobei die dabei gebildeten Nitrate zusammen mit aktiviertem Schlamm in die erste Oxidationsstufe rückgeführt werden, die dann in der Reduktionsstufe beseitigt werden.

Nach einer vorteilhaften Ausführungsform des erfindungsgemäßen Verfahrens wird simultan mit der Oxidation in der zweiten Oxidationsstufe eine Fluidfiltration des Abwassers vorgenommen, wobei der abgetrennte aktivierte Schlamm selbsttätig in die zweite Oxidationsstufe rückgeführt wird.

Nach einer weiteren vorteilhaften Ausführungsform wird das eingeführte Rohabwasser so aufgeteilt, daß das Verhältnis des Volumens der ersten Teilmenge, die in die erste Oxidationsstufe eingeführt wird, zum Volumen der zweiten Teilmenge, die in die Reduktionsstufe eingeführt wird, 2:3 bis 3:2 beträgt. Das eingesetzte Rohabwasser wird entsprechend in einem Prozentverhältnis 40:60 bis 60:40 aufgeteilt. Anders ausgedrückt, beträgt die Teilmenge des Abwassers, die in die erste Oxidationsstufe eingeführt wird, vorzugsweise 40 bis 60 % der Gesamtmenge des eingeführten Rohabwassers.

Die erfindungsgemäße Vorrichtung, die insbesondere zur Durchführung des oben erläuterten Verfahrens geeignet ist, ist gekennzeichnet durch eine erste Oxidationszone, die über eine Verbindungsleitung mit einer Reduktionszone verbunden ist, deren Ausgang über eine Verbindungsleitung mit einer zweiten Oxidationszone in Verbindung steht, die ihrerseits eine Abführleitung für gereinigtes Abwasser aufweist und über eine Rückführungsleitung mit der ersten Oxidationszone verbunden ist, wobei die erste Oxidationszone, die Reduktionszone und die zweite Oxidationszone ein Zirkulationssystem bilden und die Rohabwasserzufuhr in zwei Teilströme aufgeteilt ist, von denen der erste Teilstrom in die erste Oxidationszone und der zweite Teilstrom in die Reduktionszone geführt sind.

Bei einer vorteilhaften Ausführungsform weist die zweite Oxidationszone eine Fluidfiltrationseinrichtung für den aktivierten Schlamm mit selbsttätiger Rückführung des aktivierten Schlamms in die zweite Oxidationszone auf.

In einer vorteilhaften Weiterbildung ist eine Umwälzeinrichtung im Zirkulationssystem vorgesehen, die

vorteilhaft eine Pumpe ist, die in der Rückführungsleitung zwischen der zweiten Oxidationszone und der ersten Oxidationszone angeordnet ist.

Die erfindungsgemäße Vorrichtung weist vorteilhaft ferner Mittel zur Aufteilung der Rohabwasserzufuhr im Volumverhältnis 2:3 bis 3:2 auf.

Das erfindungsgemäße Verfahren und die erfindungsgemäße Vorrichtung werden im folgenden anhand der Zeichnung näher erläutert, in der ein Blockdiagramm der erfindungsgemäßen Vorrichtungskonzeption dargestellt ist.

Die Vorrichtung umfaßt eine erste Oxidationszone 1 mit einem nicht dargestellten Belüftungssystem, eine Reduktionszone 2 und eine zweite Oxidationszone 3, die ebenfalls ein nicht dargestelltes Belüftungssystem aufweist, ferner eine Fluidfiltrationseinrichtung 4 zur Abscheidung des aktivierten Schlamms mit selbsttätiger Rückführung des abgeschiedenen aktivierten Schlamms in die zweite Oxidationszone 3.

Die erste Oxidationszone 1 die Verbindungsleitung 8, die sie mit der Reduktionszone 2 verbindet, die Reduktionszone 2, die Verbindungsleitung 9, die zweite Oxidationszone 3 sowie die Rückführungsleitung 10 bilden folglich ein geschlossenes Zirkulationssystem, wobei die Abführung des gereinigten Abwassers aus der zweiten Oxidationszone 3 über eine Abführleitung 12 erfolgt. Die Rohwasserzufuhr 5 ist in zwei Teilströme 6, 7 aufgeteilt, wobei der erste Teilstrom 6 in die erste Oxidationszone 1 und der zweite Teilstrom 7 in die Reduktionszone 2 geführt sind.

In der Rückführungsleitung 10 ist ferner eine Pumpe 11 als Umwälzeinrichtung vorgesehen. Die Abführleitung 12 führt von der Fluidfiltrationseinrichtung 4 in der zweiten Oxidationszone 3 aus dem Reinigungssystem heraus.

Das erfindungsgemäße Verfahren der Denitrifikation von Abwässern wird folgendermaßen durchgeführt:

Die Rohwasserzufuhr 5 wird in die zwei Teilströme 6, 7 aufgeteilt, von denen der Teilstrom 6 in die erste Oxidationszone 1 geführt ist, wobei über den Teilstrom 6 organische Stoffe und stickstoffhaltige Verunreinigungen, die im Rohwasser enthalten sind, in die erste Oxidationszone 1 gelangen. Über die Rückführungsleitung 10 werden der ersten Oxidationszone 1 aktivierter Schlamm und Wasser mit einem Gehalt an Nitraten aus der zweiten Oxidationszone 3 zugeführt. Diese organischen Stoffe werden in der ersten Oxidationszone 1 biologisch abgebaut; die zugeführ ten stickstoffhaltigen Verunreinigungen werden zu Nitraten oxidiert. Das aus der ersten Oxidationszone 1 austretende Abwasser, das aktivierten Schlamm und Nitrate enthält, die sowohl durch Oxidation der über den Teilstrom 6 zugeführten stickstoffhaltigen Verunreinigungen als auch durch Oxidation der über die Rückführungsleitung 10 zugeführten Verunreinigungen entstanden sind, werden über die Verbindungsleitung 8 der Reduktionszone 2 zugeführt. Über den zweiten Teilstrom 7 werden organische Stoffe und stickstoffhaltige Verunreinigungen, die im Rohabwasser enthalten sind, in die Reduktionszone 2 eingeführt. Nitrate, die über die Verbindungsleitung 8 in die Reduktionszone 2 gelangen, werden mittels der organischen Stoffe, die über den ersten Teilstrom 6 zugeführt wurden, zu gasförmigem Stickstoff reduziert.

Die erwähnten organischen Stoffe werden dabei biologisch abgebaut; gleichzeitig wird auch ein Teil der stickstoffhaltigen Verunreinigungen, die über den ersten Teilstrom 6 zugeführt wurden, biologisch abgebaut. Das aktivierte Gemisch wird über die Verbindungsleitung 9 aus der Reduktionszone 2 abgeführt und in die zweite Oxidationszone 3 eingeleitet. Dieses Gemisch enthält den aktivierten Schlamm und den Rest der Verunreinigungen, der über den zweiten Teilstrom 7 der Reduktionszone 2 zugeführt wurde und während der Denitrifikationsvorgänge in der Reduktionszone 2 nicht verbraucht wurde. Diese restlichen Verunreinigungen werden in Gegenwart des aktivierten Schlamms in der zweiten Oxidationszone 3 biologisch abgebaut und oxidiert, wobei die stickstoffhaltigen Verunreinigungen, die über die Verbindungsleitung 9 in die zweite Oxidationszone 3 gelangten, zu Nitraten oxidiert werden. Diese Nitrate werden dann zusammen mit aktiviertem Schlamm über die Pumpe 11 und die Rückführungsleitung 10 der ersten Oxidationszone 1 zugeführt und so durch das oben erwähnte Verfahren beseitigt.

Durch diese erfindungsgemäße Verfahrensweise werden die rückgeführten Nitrate nur teilweise durch die stickstoffhaltigen Verunreinigungen, die im ersten Teilstrom 6 des Rohabwassers enthalten sind, gebildet, so daß bei gegebener Intensität der Zirkulation der Grad der Beseitigung der Nitrate wesentlich höher ist als bei einer Zirkulation gemäß dem Stand der Technik mit einer Reduktionszone und einer Oxidationszone.

Ein Teil des aktivierten Gemischs aus der zweiten Oxidationszone 3 wird der Fluidfiltrationseinrichtung 4 zugeführt, wo der aktivierte Schlamm durch Fluidfiltration abgeschieden und in die zweite Oxidationszone 3 rückgeführt wird, während das gereinigte Abwasser über die Abführleitung 12 abgeführt wird.

Die Intensität des Reinigungsvorgangs ist durch die Konzentration des aktivierten Schlamms bestimmt. Die Konzentration des aktivierten Schlamms in der zweiten Oxidationszone 3 hängt vom Wirkungsgrad des Abscheidevorgangs in der Fluidfiltrationseinrichtung 4 sowie von der Effektivität in der ersten Oxidationszone 1 ab, ferner von der Konzentration in der zweiten Oxidationszone 3 sowie von der Intensität der

Zirkulation. Um eine genügend hohe Intensität der Zirkulation in der ersten Oxidationszone 1 und der Reduktionszone 2 zu erzielen, muß auch die Intensität der Rückführung über die Rückführungsleitung 10 genügend hoch sein. Dies geschieht durch die Umwälzeinrichtung in der Rückführungsleitung 10, die vorteilhaft eine Pumpe 11 ist.

Bei der Reinigung des flüssigen Anteils von Schweinegülle mit einem durchschnittlichen Gehalt von 800 mg/l TKN (TKN = Gesamt-Kjeldahl-Stickstoff) als Beispiel wird nach Oxidation des Ammoniakstickstoffs sowie des organischen Stickstoffs und bei einer erforderlichen Reduzierung des Nitratanteils im gereinigten Abwasser unter 20 mg/l ein Wirkungsgrad bei der Beseitigung von Nitrat von 97,5 % benötigt, was bei Anwendung der herkömmlichen Verfahrensweise einem Zirkulationsverhältnis von n = 39 ent sprechen würde. Ein derartiges Zirkulationsverhältnis kann jedoch nicht in wirtschaftlicher Weise realisiert werden.

Wenn jedoch 50 % des TKN schon in der ersten Oxidationszone vor der Denitrifikation oxidiert wurde, ist zur Erzielung des geforderten Wirkungsgrades der Denitrifikation lediglich ein Zirkulationsverhältnis von n = 19 erforderlich. Erfindungsgemäß kann also durch diese erhebliche Verringerung des erforderlichen Zirkulationsverhältnisses der entsprechende Energieaufwand um mehr als die Hälfte verringert werden.

Bei der komplexen Reinigung städtischer Abwässer mit einer durchschnittlichen Konzentration von 60 mg $N\text{-}NO_3$/l ist ein Wirkungsgrad der Denitrifikation von 83,3 % erforderlich, was bei der herkömmlichen Verfahrensweise einem Zirkulationsverhältnis von n = 5 entspricht. Wenn andererseits bei der erfindungsgemäßen Verfahrensweise in der ersten Oxidationszone 50 % TKN oxidiert wurden, kann das Zirkulationsverhältnis auf n = 2 verringert werden. In diesem Fall werden folglich mehr als 2/3 des Energieaufwands gegenüber dem Stand der Technik eingespart.

Bei großen Abwassermengen bedeutet dies eine erhebliche Einsparung an Betriebskosten.

Versuche ergaben, daß das geeignetste prozentuale Aufteilungsverhältnis des Rohabwassers in die beiden Teilströme im Bereich von 40:60 bis 60:40 liegt; in diesem Bereich werden optimale Ergebnisse erzielt.

Durch Versuche wurde ferner festgestellt, daß bei der erfindungsgemäßen Verfahrensweise der Grad der Beseitigung von Nitraten noch höher ist, als einer einfachen Denitrifikation entspricht.

Aufgrund der experimentellen Feststellungen ist davon auszugehen, daß dieser vorteilhafte Effekt zusätzlich eine Folge der Beseitigung eines Teils der stickstoffhaltigen Verunreinigungen aus dem Teilstrom des Abwassers ist, der direkt in die Reduktionszone 2 eingeführt wird, und die direkt in dieser Zone stattfindet.

Dadurch wird auch wiederum die Menge der stickstoffhaltigen Verunreinigungen in der zweiten Oxidationsstufe 3 herabgesetzt, so daß bei diesem zweiten Oxidationsprozeß bereits weniger Nitrate entstehen, weshalb auch die resultierende Menge der Nitrate im gereinigten Abwasser entsprechend niedriger ist.

Es kann vorausgesetzt werden, daß die Beseitigung der stickstoffhaltigen Verunreinigungen aus dem Abwasser, das in die zweite Oxidationszone 3 gelangt, auf folgende Weise vor sich geht:

Die Nitrate werden bei der Denitrifikation in einer zweistufigen Reduktion beseitigt :

Erste Stufe: $NO_3^- \xrightarrow{\text{organische Stoffe}} NO_2^-$;

Zweite Stufe: $NO_2^- \xrightarrow{\text{organische Stoffe}} N_2$.

Die stickstoffhaltigen Verunreinigungen im Abwasser werden einerseits durch Ammoniak und andererseits durch gebundenen Stickstoff gebildet.

Für die Herabsetzung der Menge dieser Verunreinigungen kommt folgende Reaktion in Betracht:

$NO_2^- + NH_4^+ \rightarrow N_2 + 2\,H_2O$,

wobei also in der zweiten Stufe anstelle der organischen Stoffe Ammoniak mit den gebildeten Nitriten reagiert.

Aus einem Teil des Abwassers, das direkt in die Reduktionszone 2 geleitet wird, wird also bei dieser Verfahrensweise Ammoniak beseitigt, so daß die Stickstoffmenge, die in die zweite Oxidationszone 3 gelangt, dort geringer ist, so daß auch der Gesamtwirkungsgrad der Stickstoffbeseitigung entsprechend höher ist.

Das erfindungsgemäße Verfahren und die erfindungsgemäße Vorrichtung sind entsprechend mit einer Reihe von Vorteilen verbunden: Bei Abwässern mit einem Überschuß an verunreinigenden organischen Komponenten gegenüber den stickstoffhaltigen Verunreinigungen können wesentliche Einsparungen bei Betriebs- und Investitionskosten erzielt werden. Der Hauptvorteil der Erfindungskonzeption ist jedoch in der

Möglichkeit zu sehen, daß ein sehr hoher Wirkungsgrad bei der Denitrifikation erzielt werden kann, so daß auch strengen Anforderungen hinsichtlich des Endgehalts an Nitraten im gereinigten Abwasser entsprochen werden kann, was insbesondere auch bei stark verunreinigten Abwässern, beispielsweise Verunreinigungen mit Tierexkrementen und insbesondere Schweinegülle, besonders vorteilhaft ist.

## Ansprüche

1. Verfahren zur Denitrifikation von Abwässern, insbesondere mit hohem Gehalt an stickstoffhaltigen Verbindungen, durch biologische Aktivierungsreinigung mit einem einheitlichen, im Reinigungssystem zirkulierenden aktivierten Schlamm und einer Oxidations- und einer Reduktionsstufe,
**dadurch gekennzeichnet,** daß
- eine Teilmenge des Rohabwassers zunächst in einer ersten Oxidationsstufe mit Hilfe von rückgeführtem aktiviertem Schlamm oxidiert wird,
- die durch Oxidation entstandenen Nitrate zusammen mit Nitraten aus rückgeführtem Aktivierungsgemisch in der Reduktionsstufe reduziert werden, wobei die restliche Teilmenge des Rohabwassers in die Reduktionsstufe eingeführt wird,
und
- der Rest der stickstoffhaltigen Verunreinigungen dieser Teilmenge des Abwassers in einer zweiten Oxidationsstufe oxidiert wird, in die Abwasser aus der Reduktionsstufe eingeführt wird, wobei die dabei gebildeten Nitrate zusammen mit aktiviertem Schlamm in die erste Oxidationsstufe rückgeführt werden.

2. Verfahren nach Anspruch 1, dadurch gekennzeichnet daß in der zweiten Oxidationsstufe eine Fluidfiltration des gereinigten Abwassers vorgenommen und der aktivierte Schlamm selbsttätig in die zweite Oxidationsstufe rückgeführt wird.

3. Verfahren nach Anspruch 1 oder 2, dadurch gekennzeichnet, daß das eingeführte Rohabwasser so aufgeteilt wird, daß das Verhältnis des Volumens der ersten Teilmenge zum Volumen der zweiten Teilmenge 2:3 bis 3:2 beträgt.

4. Vorrichtung zur Durchführung des Verfahrens nach einem der Ansprüche 1 bis 3,
gekennzeichnet durch
- eine erste Oxidationszone (1), die über eine Verbindungsleitung (8) mit einer Reduktionszone (2) verbunden ist, deren Ausgang über eine Verbindungsleitung (9) mit einer zweiten Oxidationszone (3) in Verbindung steht, die ihrerseits eine Abführleitung (12) für gereinigtes Abwasser aufweist und über eine Rückführungsleitung (10) mit der ersten Oxidationszone (1) verbunden ist,
wobei die erste Oxidationszone (1), die Reduktionszone (2) und die zweite Oxidationszone (3) ein geschlossenes Zirkulationssystem bilden und die Rohabwasserzufuhr (5) in zwei Teilströme (6, 7) aufgeteilt ist, von denen der erste Teilstrom (6) in die erste Oxidationszone (1) und der zweite Teilstrom (7) in die Reduktionszone (2) geführt sind.

5. Vorrichtung nach Anspruch 4, dadurch gekennzeichnet, daß die zweite Oxidationszone (3) eine Fluidfiltrationseinrichtung (4) für den aktivierten Schlamm mit selbsttätiger Rückführung des aktivierten Schlamms in die zweite Oxidationszone (3) aufweist.

6. Vorrichtung nach Anspruch 4 oder 5, gekennzeichnet durch eine Umwälzeinrichtung (11) im Zirkulationssystem.

7. Vorrichtung nach Anspruch 6, dadurch gekennzeichnet, daß die Umwälzeinrichtung eine Pumpe (11) ist, die in der Rückführungsleitung (10) vorgesehen ist.

8. Vorrichtung nach einem der Ansprüche 4 bis 7, gekennzeichnet durch Mittel zur Aufteilung der Rohabwasserzufuhr im Volumverhältnis 2 : 3 bis 3 : 2

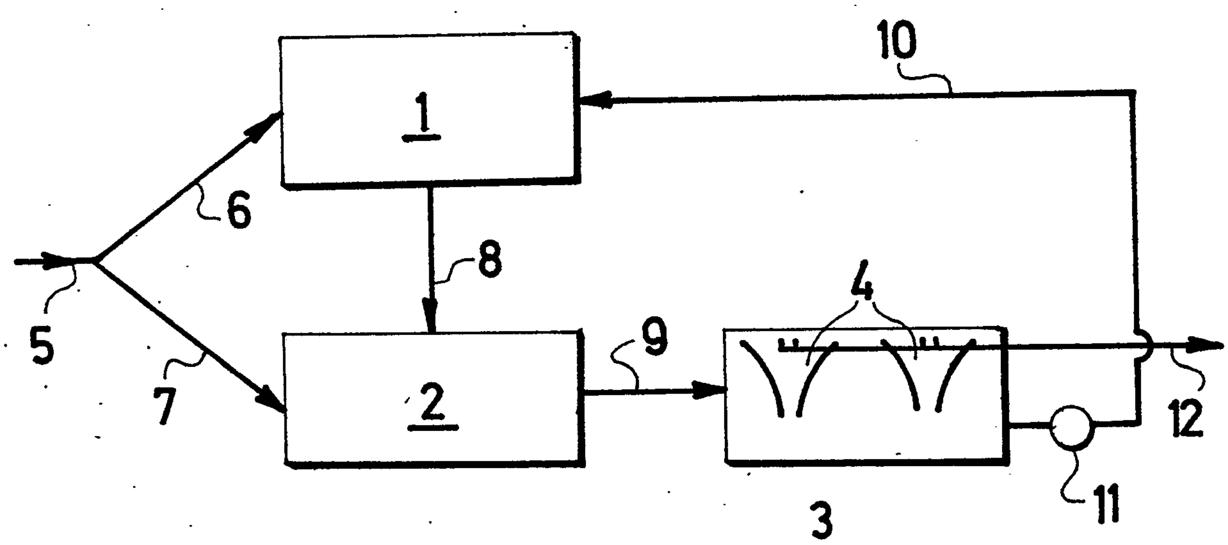
10
1
6
8
5
4
9
7
2
12
11
3

Europäisches Patentamt

# EUROPÄISCHER RECHERCHENBERICHT

Nummer der Anmeldung

EP 89 11 7531

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 019 203 (LINDE) * Seite 7, Zeile 6 - Seite 8, Zeile 12; Seite 9, Zeile 23 - Seite 10, Zeile 10 * | 1,4 | C 02 F 3/30 |
| A | DE-A-3 534 244 (SCHUMACHER'SCHE FABRIK) * Spalte 4, Zeile 3 - Spalte 5, Zeile 6; Spalte 5, Zeile 33 - Spalte 6, Zeile 35 * | 1,4 | |
| A | FR-A-2 382 405 (STAMICARBON) * Seite 1, Zeilen 1-14; Seite 2, Zeilen 16-37; Seite 5, Zeile 24 - Seite 6, Zeile 6; Seite 6, Zeilen 15-18 * | 1,4 | |
| A | DE-A-2 826 922 (W. MÄNNCHEN) * Seite 1, Ansprüche 1,2; Seite 2, letzter Absatz - Seite 4, Absatz 3; Seite 5, Absatz 2 - Seite 6, Absatz 1; Seite 7, letzter Absatz - Seite 8 * | 1 | |
| A | DE-A-3 144 019 (AGROTECHNIKA) * Seite 1, Anspruch 1 * | 2,5 | |

| RECHERCHIERTE SACHGEBIETE (Int. Cl.5) |
|---|
| C 02 F |

Der vorliegende Recherchenbericht wurde für alle Patentansprüche erstellt

| Recherchenort | Abschlußdatum der Recherche | Prüfer |
|---|---|---|
| DEN HAAG | 18-12-1989 | TEPLY J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)